# EUROPÄISCHE PATENTSCHRIFT

(11) **EP 2 017 111 B1**
(45) Veröffentlichungstag und Bekanntmachung des Hinweises auf die Patenterteilung: **03.08.2011**
(21) Anmeldenummer: 08010746.9
(22) Anmeldetag: 12.06.2008
(51) Int. Cl.: B60J 10/08

(54) **Federnde Portaldichtung für eine Fahrzeugtür**
Resilient sealing for a portal for a vehicle door
Joint d'étanchéité élastique d'un portique pour une porte de véhicule

(30) Priorität: 18.06.2007 DE 202007008489 U
(43) Veröffentlichungstag der Anmeldung: 21.01.2009
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134 Blaustein (DE); Grein, Horst, 34637 Schrecksbach (DE)
(74) Vertreter: König, Beate

(56) Entgegenhaltungen:
- EP-A- 1 726 468
- DE-U1- 20 316 762
- US-A- 4 119 325

## Beschreibung

Die Erfindung betrifft eine federnde Portaldichtung für eine mit Falz versehene Schwenktür/Schwingtür, insbesondere Schwenkschiebetür und Außenschwingtür, für Fahrzeuge für den Personentransport.

Schwenktüren, insbesondere Außenschwing- und Innenschwenktüren, werden bei Fahrzeugen für den Personentransport, insbesondere Bussen und Bahnen, vielfach verwendet. Sind diese während der Fahrt nicht ausreichend abgedichtet, kommt es nicht nur zu Zug und eventuellem Eindringen von Nässe, sondern auch zu als sehr störend empfundenen Windgeräuschen.

Zur Abdichtung des Türflügels gegen das Portal sind etliche Dichtungen entwickelt worden.

In der EP 1 726 468 A1 ist eine Dichtungsvorrichtung für beispielsweise Schließ- und Wandungsteile für Fahrzeugaufbauten bekannt, die Dichtungsteile und daran mit Abstand voneinander befestigte Dichtelemente aufweist. Die Dichtelemente sind mit Befestigungseinrichtungen in Halterungen eines Basiskörpers einsetzbar und an diesem abstützbar. Sie können ausgetauscht werden. Für die Abdichtung beispielsweise innen und außen an einem Fahrzeugportal weisen die Dichtelemente Dichtlippen auf.

Aus der WO 02/26511 A2 ist eine Portaldichtung für Schiebeschwenktüren bekannt, die einen zwischen dem geschlossenen Türflügel und dem Rand der Türöffnung gebildeten Türspalt verdecken soll und ein als Befestigung dienendes Trägerprofil umgreift. Die Portaldichtung ist T-förmig ausgebildet und liegt den beiden Schenkeln relativ flach auf der Außenseite des Türflügels bzw. der Fahrzeugaußenhaut auf. Das Trägerprofil dient zusätzlich auch als Befestigung für eine Einklemmschutzleiste, um auf eine zweite Halterung verzichten zu können.

Bei einer anderen Schwenkschiebetür ist am Türpfosten ein Winkelprofil angebracht, dessen einer Schenkel vom Türpfosten nach vorne weist. An der Türkante ist innen ein Dichtungsprofil befestigt, das bei geschlossener Tür zur Auflage auf dem vorstehenden Schenkel des Winkelprofils gelangt. Aufgrund von Toleranzabweichungen kann es zu einem nicht ausreichenden Anpressdruck der Tür kommen, der Windgeräusche zulässt.

Die DE 20 2004 007 407 Ul betrifft eine Verriegelungsvorrichtung für Türen an Fahrzeugen für den Personentransport, wobei in einer Dichtungshalterung einer Portaldichtung vorgesehen ist, in der ein Verriegelungselement, beispielsweise ein Bolzen, verschiebbar geführt ist. An der gegenüberliegenden Türkante befindet sich ein Verriegelungsgegenelement, das eine dort angebrachte weitere Dichtung durchdringt. Die Portaldichtung und die weitere Dichtung übergreifen jeweils den Türspalt mit einer Lippe.

Der Erfindung liegt die Aufgabe zugrunde, eine Portaldichtung zu schaffen, die eine zuverlässige Abdichtung des Spalts zwischen Tür und Türportal gewährleistet.

Diese Aufgabe ist durch die Erfindung bei einer federnden Portaldichtung mit den Merkmalen des Anspruchs 1 gelöst. Vorteilhafte Weiterbildungen der erfindungsgemäßen Portaldichtung sind Gegenstand der Unteransprüche.

Eine federnde Portaldichtung gemäß der Erfindung für eine mit Falz versehene Schwenktür/Schwingtür, insbesondere Schwenkschiebetür und Außenschwingtür, für Fahrzeuge für den Personentransport, weist somit die folgenden Merkmale auf. Sie hat eine steife Basisleiste mit an deren Hinterseite vorgesehenen Halterungseinrichtungen für die Halterung der Portaldichtung, wobei die Breitenrichtung der Basisleiste parallel zur Breitenrichtung des Portals (y-Richtung) ist. Von der Basisleiste steht von deren in bezug auf die Breitenrichtung des Portals innerem Bereich ein flexibler erster Schenkel ab, der für einen dichtenden Eingriff mit der Innenseite des Türflügels vorgesehen ist. Des weiteren steht von der Basisleiste von deren in bezug auf die Breitenrichtung des Portals äußerem Bereich ein flexibler zweiter Schenkel ab, der für einen dichtenden Eingriff mit dem Türfalz vorgesehen ist. So ist dieser ausgeführt, dass er sich von der Basisleiste aus schräg nach außen erstreckt, wobei er in einem Bogen zuerst nach oben und dann nach hinten weist, womit eine Vorspannung nach außen für den dichtenden Eingriff mit dem Türflügel vorgesehen wird. Der zweite Schenkel ist auf der nicht mit dem Türfalz in Eingriff tretenden Seite mit einer Abstützlippe versehen.

Aufgrund dieser Ausgestaltung kann ein hoher Anpressdruck der Tür in y-Richtung realisiert werden, den die Abstützlippe auffängt. So kann eine hohe Dichtigkeit erzielt werden. Zugleich ist es möglich, infolge mehr oder weniger starker Deformation der Abstützlippe herstellungs- oder montagebedingte Toleranzen in der Breitenrichtung des Portals auszugleichen.

Durch den vergleichsweise hohen Anpressdruck bei geschlossener Tür kommt es beim Öffnen der Tür wiederum dazu, dass die vorzugsweise elastisch ausgebildete Abstützlippe und der zweite Schenkel wieder zurückfedern. Auf diese Weise kann sichergestellt werden, dass sich der zweite Schenkel nicht mit dem Portal verhakt.

Durch die Gestalt des sich schräg nach außen erstreckenden und Bogengestalt aufweisenden zweiten Schenkels kann auch ein Toleranzausgleich in der x-Richtung, d.h. senkrecht zur Breitenrichtung des Portals, ermöglicht werden.

Die erfindungsgemäße federnde Portaldichtung ermöglicht somit einerseits eine zuverlässige Abdichtung des Spalts zwischen Tür und Türportal. Insbesondere können durch die oben beschriebene Konstruktion auch große Toleranzen von Portal und/oder Tür ausgeglichen, d.h. auch in diesen Fällen sicher abgedichtet werden.

Bei einer bevorzugten Ausführungsform der Abstützlippe des zweiten Schenkels ist diese bogenförmig nach innen, insbesondere C-förmig, abgebogen. Dies ermöglicht ein Nachgeben durch Verschieben und Zusammendrücken der Abstützlippe. Abgesehen von dieser oder anderen runden Ausgestaltungen der Abstützlippe kann diese aber auch andere Form haben, beispielsweise Zickzack-, Schleifen- oder Wendelform, derart, dass die Gestalt der Abstützlippe bereits ein elastisches Nachgeben bei Druckausübung auf diese gestattet.

Eine erhöhte Steifigkeit des zweiten Schenkels ergibt sich bei einer vorteilhaften Ausführungsform desselben dadurch, dass sein Außenende nach vorne gebogen ist.

Dadurch, dass sich der erste Schenkel von der Basisleiste aus schräg nach vorne erstreckt, kann eine Vorspannung nach außen für den dichtenden Eingriff mit dem Türflügel vorgesehen werden. Durch Wahl der Schenkellänge, der Schenkeldicke und des Winkels kann die Vorspannung festgelegt werden. Zugleich kann auch eine ausreichende Dichtigkeit durch festes Anliegen des ersten Schenkels mit ausreichendem Überlapp sichergestellt werden.

Vorteilhaft sind der erste und der zweite Schenkel einstückig mit der Basisleiste ausgebildet. Dies verhindert das Entstehen von Klebe- oder Vulkanisationstellen am Dichtungsprofil.

Als Material wird vorzugsweise Elastomer, insbesondere Gummi, gewählt.

Zur Anbringung am Portal dient zweckmäßig ein Profil, vorzugsweise ein Metallprofil, als Träger für die Portaldichtung. Als Material wird Aluminium bevorzugt.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigen:
- Fig. 1: eine schematische Teilschnittansicht eines mit einer federnden Portaldichtung gemäß einem Ausführungsbeispiel der Erfindung ausgestatteten Türportals und einer sich schließenden Tür,
- Fig. 2: eine schematische Teilschnittansicht ähnlich Fig. 1, kurz vor Eingriff der Tür mit der Portaldichtung,
- Fig. 3: eine schematische Teilschnittansicht ähnlich Fig. 1, nach Eingriff der Tür mit der Portaldichtung und
- Fig. 4: eine schematische Teilschnittansicht ähnlich Fig. 1, nach Ende des Schließvorgangs.

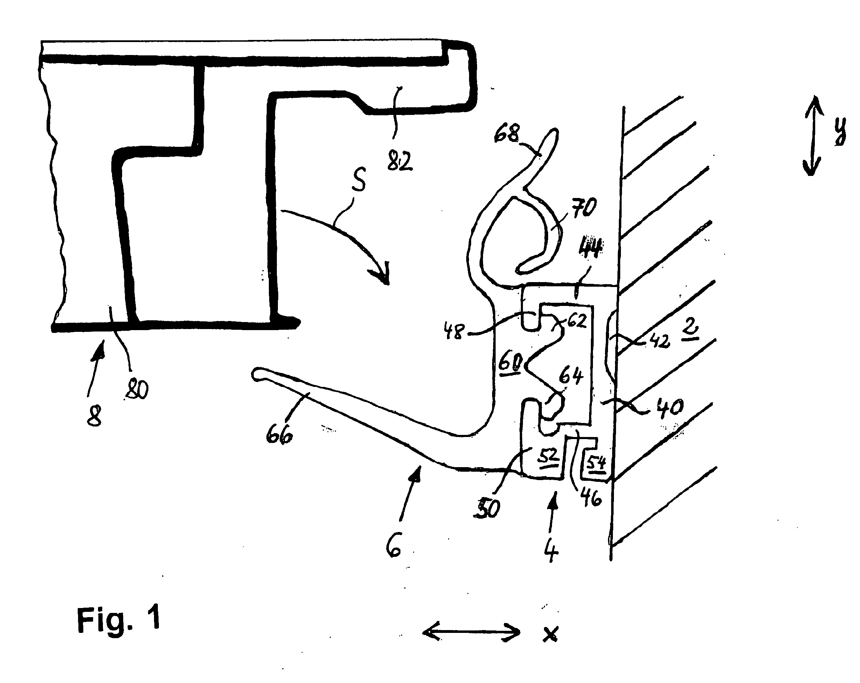

Es wird zunächst auf Fig. 1 Bezug genommen, die einen Türportalbereich eines Fahrzeugs zur Personenbeförderung zeigt. In Fig. 1 ist bezüglich des Fahrzeugs die Außenseite oben und das Fahrzeuginnere unten. An einem Türportal 2 ist ein Trägerprofil 4 aus Aluminium angebracht. In dem Trägerprofil 4 ist eine Portaldichtung 6 aus Gummi gehaltert. Dem Türportal 2 gegenüber befindet sich der Flügel 80 einer mit einem Falz 82 versehenen Schwenkschiebetür oder Außenschwingtür 8, die sich im Schließvorgang befindet, was durch einen Pfeil S angedeutet ist.

Das Trägerprofil 4 hat einen im wesentlichen U-förmigen Querschnitt mit einem Boden 40, der einen Luftspalt 42 zum Verkleben frei lässt, und zwei Seitenschenkeln 44, 46 mit nach innen weisenden Flanschen 48, 50. Der innere Seitenschenkel 46 geht nach oben, d.h. vom Türportal 2 fort, in einen verstärkten Bereich 52 über. Gegenüber dem verstärkten Bereich 52 ist der Boden 40 ebenfalls zu einem verstärkten Bereich 54 ausgebildet.

Die Portaldichtung 6 umfasst eine steife Basisleiste 60, die an der zum Türportal 2 hin weisenden Hinterseite zwei abgekröpfte Halterungsstege 62, 64 aufweist. Die Halterungsstege 62, 64 umgreifen die Flansche 48, 50.

Vom inneren Bereich der Basisleiste 60 aus erstreckt sich ein flexbiler erster Schenkel 66 nach vorne (x-Richtung) und zugleich nach außen (y-Richtung), so dass eine Vorspannung für das Anliegen am Türflügel 8 geschaffen wird. Der erste Schenkel 66 wird zum äußeren Ende hin dünner und damit flexibler.

Vom äußeren Bereich der Basisleiste 60 aus erstreckt sich ein zweiter Schenkel 68. Dieser ist erst nach oben und dann nach außen und hinten gebogen ausgeführt. Hierdurch wird eine Vorspannung für den Eingriff mit dem Türfalz vorgesehen. Am Au-ßenende ist der zweite Schenkel 68 nach vorne gebogen. An der Unterseite ist der zweite Schenkel 68 im mittleren bis äußeren Bereich mit einer elastischen Abstützlippe 70 versehen. Die Abstützlippe 70 ist C-förmig nach innen gebogen.

In Fig. 1 befindet sich die Tür 8 zwar bereits beim Schließvorgang, hat aber noch nicht die Endphase mit Eingriff mit der Portaldichtung 6 erreicht.

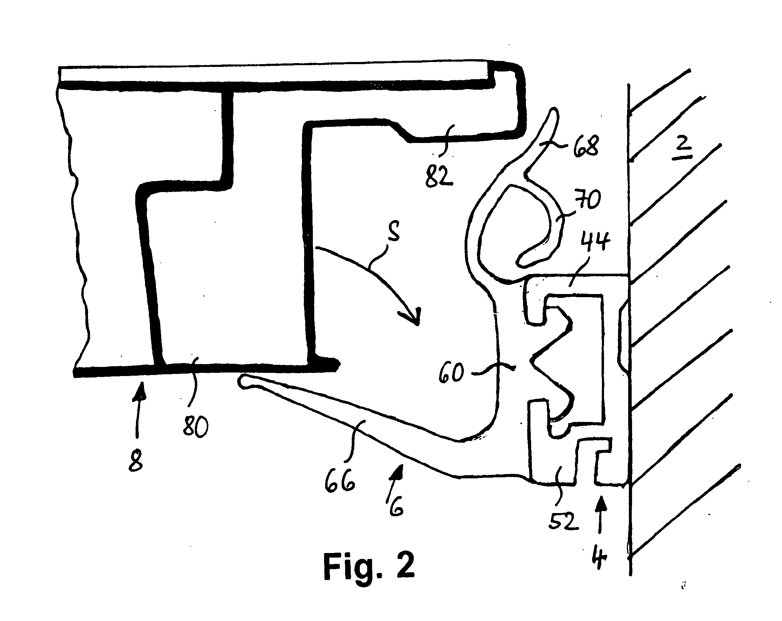

Fig. 2 zeigt den Zustand kurz vor dem Eingriff mit der Portaldichtung.

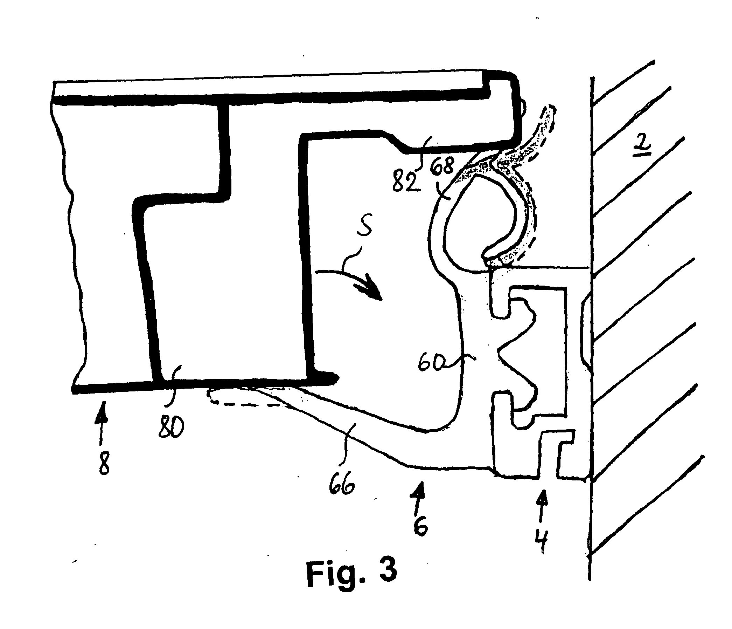

Bei der Darstellung von Fig. 3 ist dieser Eingriff bereits erfolgt. Der erste Schenkel 66 der Portaldichtung 60 ist von dem Türflügel 80 nach unten ausgelenkt worden, wie durch die gestrichelte Darstellung angedeutet wird. Der zweite Schenkel 68 ist vom Türfalz 82 ebenfalls ausgelenkt worden, und zwar im wesentlichen nach hinten in Richtung Türportal.

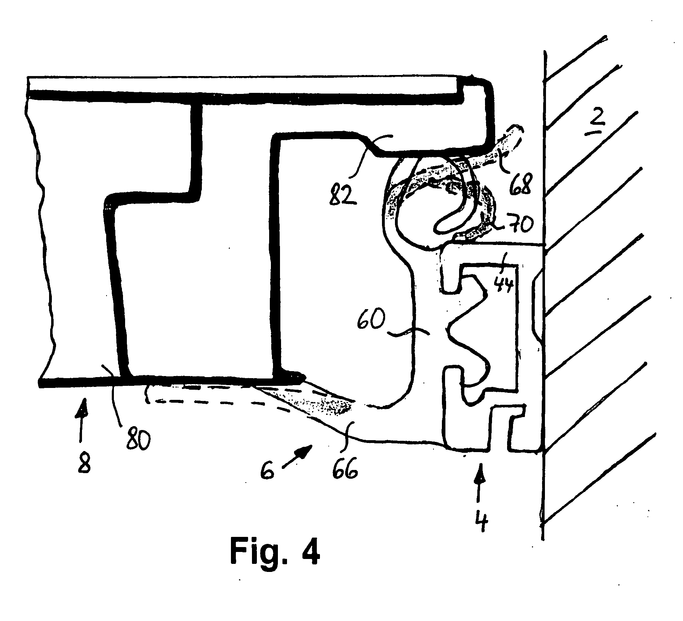

In Fig. 4 ist der Zustand bei geschlossener Tür 8 gezeigt. Der erste Schenkel 66 ist weiter nach innen ausgelenkt worden und erstreckt sich jetzt im wesentlichen in x-Richtung. Der zweite Schenkel 68 ist noch weiter nach hinten, zugleich auch nach innen ausgelenkt worden. Die Abstützlippe 70 ist gegen den Seitenschenkel 44 des Trägerprofils 4 gedrückt worden und hat nun eine abgeflachte Gestalt, wobei sich das Lippenende nach vorne, d.h. in Richtung Tür weiter umgelegt hat. Dadurch bleibt der zweite Schenkel 68 weiterhin unter Vorspannung gegen den Türfalz 82.

## Patentansprüche

1. Federnde Portaldichtung (6) für eine mit Falz (82) versehene Schwenktür/Schwingtür, insbesondere Schwenkschiebetür und Außenschwingtür, für Fahrzeuge für den Personentransport, umfassend
eine steife Basisleiste (60) mit an deren Hinterseite vorgesehenen Halterungseinrichtungen (62, 64) für die Halterung der Portaldichtung (6), wobei die Breitenrichtung der Basisleiste parallel zur Breitenrichtung des Portals ist,
einen von der Basisleiste (60) von deren in bezug auf die Breitenrichtung des Portals innerem Bereich abstehenden, flexiblen ersten Schenkel (66), der für einen dichtenden Eingriff mit der Innenseite eines Türflügels (80) vorgesehen ist, und
einen von der Basisleiste (60) von deren in bezug auf die Breitenrichtung des Portals äußerem Bereich abstehenden, flexiblen zweiten Schenkel (68), der für einen dichtenden Eingriff mit dem Türfalz (82) vorgesehen ist,
**dadurch gekennzeichnet, dass**
sich der zweite Schenkel (68) von der Basisleiste aus schräg nach außen erstreckt, wobei er in einem zuerst nach oben und dann nach hinten weisenden Bogen ausgeführt ist, womit eine Vorspannung nach außen für den dichtenden Eingriff mit dem Türfalz (82) vorgesehen wird und der zweite Schenkel (68) auf der nicht mit dem Türfalz (82) in Eingriff tretenden Seite mit einer Abstützlippe (70) versehen ist.

2. Federnde Portaldichtung nach Anspruch 1, **dadurch gekennzeichnet, dass** ein zur Anbringung am Portal (2) vorgesehenes Profil (4) als Träger für die Portaldichtung (6) dient.

3. Federnde Portaldichtung nach Anspruch 2, **dadurch gekennzeichnet, dass** das Trägerprofil (4) aus Metall, vorzugsweise Aluminium, ist.

4. Federnde Portaldichtung nach einem der Ansprüche 1 bis 3, **dadurch gekennzeichnet, dass** sich der erste Schenkel (66) von der Basisleiste (60) aus schräg nach vorne erstreckt, womit eine Vorspannung nach außen für den dichtenden Eingriff mit dem Türflügel (80) vorgesehen wird.

5. Federnde Portaldichtung nach einem der Ansprüche 1 bis 4, **dadurch gekennzeichnet, dass** das Außenende des zweiten Schenkels (68) nach vorne gebogen ist.

6. Federnde Portaldichtung nach einem der Ansprüche 1 bis 5, **dadurch gekennzeichnet, dass** die Abstützlippe (70) des zweiten Schenkels (68) elastisch ist.

7. Federnde Portaldichtung nach einem der Ansprüche 1 bis 6, **dadurch gekennzeichnet, dass** die Abstützlippe (70) des zweiten Schenkels (68) bogenförmig nach innen abgebogen ist.

8. Federnde Portaldichtung nach Anspruch 7, **dadurch gekennzeichnet, dass** die Abstützlippe (70) C-förmig abgebogen ist.

9. Federnde Portaldichtung nach einem der Ansprüche 1 bis 8, **dadurch gekennzeichnet, dass** der erste und der zweite Schenkel (66, 68) einstückig mit der Basisleiste (60) ausgebildet sind.

10. Federnde Portaldichtung nach einem der Ansprüche 1 bis 9, **dadurch gekennzeichnet, dass** sie aus Elastomermaterial, insbesondere Gummi, ist.

## Claims

1. Resilient portal seal (6) for a pivoting/swinging door, in particular a pivoting-sliding door and an outwardly swinging door, provided with a rebate (82), for vehicles used for transporting people, comprising
a rigid base strip (60) with holding means (62, 64) provided on the rear side thereof for holding the portal seal (6), wherein the width direction of the base strip is in parallel with the width direction of the portal,
a flexible first limb (66) which protrudes from the base strip (60) from the region thereof which lies on the inside in relation to the width direction of the portal, and which limb is provided for sealing engagement with the inner side of a door leaf (80), and
a flexible second limb (68) which protrudes from the base strip (60) from the region thereof which lies on the outside in relation to the width direction of the portal, and which limb is provided for sealing engagement with the door rebate (82),
**characterised in that**
the second limb (68) extends in an inclined manner outwards from the base strip, wherein it is formed in an arc which initially points upwards and then points rearwards, whereby pretensioning is provided in the outwards direction for the sealing engagement with the door rebate (82), and the second limb (68) is provided with a support lip (70) on the side not coming into engagement with the door rebate (82).

2. Resilient portal seal as claimed in claim 1, **characterised in that** a profile (4) provided for attachment to the portal (2) serves as a support for the portal seal (6).

3. Resilient portal seal as claimed in claim 2, **characterised in that** the support profile (4) is formed from metal, preferably aluminium.

4. Resilient portal seal as claimed in any one of claims 1 to 3, **characterised in that** the first limb (66) extends in an inclined manner forwards from the base strip (60), whereby pretensioning is provided in the outwards direction for the sealing engagement with the door leaf (80).

5. Resilient portal seal as claimed in any one of claims 1 to 4, **characterised in that** the outer end of the second limb (68) is curved forwards.

6. Resilient portal seal as claimed in any one of claims 1 to 5, **characterised in that** the support lip (70) of the second limb (68) is elastic.

7. Resilient portal seal as claimed in any one of claims 1 to 6, **characterised in that** the support lip (70) of the second limb (68) is curved inwards as an arc.

8. Resilient portal seal as claimed in claim 7, **characterised in that** the support lip (70) is curved in a C shape.

9. Resilient portal seal as claimed in any one of claims 1 to 8, **characterised in that** the first and the second limb (66, 68) are formed as one piece with the base strip (60).

10. Resilient portal seal as claimed in any one of claims 1 to 9, **characterised in that** it is formed from elastomer material, in particular rubber.

## Revendications

1. Joint de portique (6) élastique pour une porte pivotante/battante à double battant munie de feuillure (82), en particulier une porte louvoyante-coulissante et une porte à pivotement extérieure, pour des véhicules destinés au transport de personnes, comprenant
une barrette de base (60) rigide avec des équipements de support (62, 64) prévus sur son côté arrière pour le support du joint de portique (6), la direction de largeur de la barrette de base étant parallèle à la direction de largeur de la porte,
une première branche (66) flexible, dépassant de la barrette de base (60) à partir de sa zone intérieure par rapport à la direction de largeur de la porte, et qui est prévue pour un engagement étanche avec le côté intérieur d'un battant de porte (80), et
une deuxième branche (68) flexible, dépassant de la barrette de base (60) à partir de sa zone extérieure par rapport à la direction de largeur du portique, et qui est prévue pour un engagement étanche avec la feuillure de porte (82),
**caractérisé en ce que**
la deuxième branche (68) s'étend vers l'extérieur obliquement à partir de la barrette de base, étant réalisée en un arc dirigé d'abord vers le haut et puis vers l'arrière, grâce à quoi une prétension est prévue vers l'extérieur pour l'engagement étanche avec la feuillure de porte (82), et **en ce que** la deuxième branche (68) est munie d'une lèvre d'appui (70) sur le côté n'entrant pas en engagement avec la feuillure de porte (82).

2. Joint de portique élastique selon la revendication 1, **caractérisé en ce qu'**un profilé (4) prévu pour être mis en place sur le portique (2) sert de support pour le joint de portique (6).

3. Joint de portique élastique selon la revendication 2, **caractérisé en ce que** le profilé support (4) est en métal, de préférence en aluminium.

4. Joint de portique élastique selon l'une des revendications 1 à 3, **caractérisé en ce que** la première branche (66) s'étend obliquement vers l'avant à partir de la barrette de base (60), grâce à quoi une prétension est prévue vers l'extérieur pour l'engagement étanche avec le battant de porte (80).

5. Joint de portique élastique selon l'une des revendications 1 à 4, **caractérisé en ce que** l'extrémité extérieure de la deuxième branche (68) est courbée vers l'avant.

6. Joint de portique élastique selon l'une des revendications 1 à 5, **caractérisé en ce que** la lèvre d'appui (70) de la deuxième branche (68) est élastique.

7. Joint de portique élastique selon l'une des revendications 1 à 6, **caractérisé en ce que** la lèvre d'appui (70) de la deuxième branche (68) est recourbé en forme d'arc vers l'intérieur.

8. Joint de portique élastique selon la revendication 7, **caractérisé en ce que** la lèvre d'appui (70) est recourbé en forme de C.

9. Joint de portique élastique selon l'une des revendications 1 à 8, **caractérisé en ce que** la première et la deuxième branche (68,66) sont constituées d'une seule pièce avec la barrette de base (60).

10. Joint de portique élastique selon l'une des revendications 1 à 9, **caractérisé en ce qu'**il est en matériau élastomère, en particulier en caoutchouc.
